# EUROPÄISCHE PATENTSCHRIFT

(11) **EP 0 974 762 B1**
(45) Veröffentlichungstag und Bekanntmachung des Hinweises auf die Patenterteilung: **04.02.2004**
(21) Anmeldenummer: 99113461.0
(22) Anmeldetag: 13.07.1999
(51) Int. Cl.: F16C 13/04, F16C 32/06, F27B 7/22, B02C 17/18

(54) **Gleitschuhlagerung für Drehtrommeln**
Sliding pad bearing for rotary drums
Palier de patins à glissement pour tambours rotatifs

(30) Priorität: 18.07.1998 DE 19832364
(43) Veröffentlichungstag der Anmeldung: 26.01.2000
(73) Patentinhaber: KHD Humboldt-Wedag AG, 51103 Köln (DE)
(72) Erfinder: Hagedorn, Alexander, 50259 Pulheim (DE); Troeder, Christoph, Prof., 52072 Aachen (DE)

(56) Entgegenhaltungen:
- DE-A- 4 316 579
- US-A- 4 139 244
- US-A- 4 322 116
- US-A- 4 373 238

## Beschreibung

Die Erfindung betrifft ein Verfahren zur Überwachung und Steuerung des Betriebes gleitschuhgelagerter Drehtrommeln wie z.B. Rohrmühlen, Drehrohröfen etc., die auf mit Drucköl beaufschlagten Gleitlagerschuhen gelagert sind. Außerdem betrifft die Erfindung eine Gleitschuhlagerung für solche Drehtrommeln.

Bekannt ist (DE 43 16579A), große schwere Drehrohre wie z. B. Rohrmühlen auf mehreren um den unteren Drehrohrumfang verteilt angeordneten hydrostatisch und/oder hydrodynamisch betriebenen Gleitlagerschuhen zu lagern, wobei das Drehrohr auf Polstern von Drucköl lastet, das in den Schmierspalt zwischen den Gleitlagerschuhen und der abgestützten Drehtrommel-Lauffläche gedrückt wird. Bisher hat man zur Überwachung des Betriebes der Gleitschuhlagerung über einen Temperaturfühler nur die Temperatur des vom Gleitlagerschuh abfließenden Drucköles gemessen. Wenn die Dicke des das Drehrohr tragenden Druckölfilmes bzw. die Schmierspaltdicke während des Betriebes zu gering wird, erwärmt sich das Drucköl. Man hat daher beim Betrieb derartiger gleitschuhgelagerter Rohrmühlen den Temperaturfühler für das Drucköl schon dazu benutzt, daß er bei Überschreiten einer Drucköltemperatur von z. B. 90°C ein Warnsignal abgibt und bei Überschreiten einer noch höheren maximal zulässigen Drucköltemperatur die Rohrmühle abschaltet. Außerdem hat man durch Einsatz eines Druckwächters und eines Durchflußwächters den Druck und die Durchflußmenge des im Kreislauf geführten Drucköles gemessen.

Die Meßgrößen der Temperatur, des Drucks sowie der Durchflußmenge des Drucköles sind aber nicht unbedingt repräsentativ für die Zustände am Gleitlagerschuh selbst, insbesondere für die dort vorhandene oder nicht vorhandene Schmierspaltdicke. So ist die Meßstelle insbesondere für den Druck sowie die Durchflußmenge des Drucköles schon aus räumlichen Gründen vom eigentlichen Ort des Geschehens, nämlich von der Gleitlagerschuh-Tragfläche, zwangsweise weit entfernt. Hinzu kommt, daß das Meßergebnis des Temperaturfühlers, des Druckwächters und/oder des Durchflußwächters für das Drucköl nur sehr träge kommt. Jedenfalls konnte bisher nicht mit Sicherheit festgestellt werden, ob beim Betrieb einer gleitschuhgelagerten Rohrmühle der Schmierspalt am hydrostatisch und/oder hydrodynamisch betriebenen Gleitlagerschuh ausreichend groß oder gar Null ist.

Der Erfindung liegt daher die Aufgabe zu Grunde, bei gleitschuhgelagerten Drehtrommeln wie z. B. Rohrmühlen die Funktion der Gleitschuhlagerelemente hinsichtlich der Dicke des hydrostatisch und/oder hydrodynamisch erzeugten Druckölfilmes bzw. Druckölpolsters zu überwachen und entsprechend dem Überwachungsergebnis den Betrieb zu steuern.

Diese Aufgabe wird gemäß der Erfindung mit den Maßnahmen des Anspruchs 1 gelöst. Vorteilhafte Ausgestaltungen der Erfindung sind in den Unteransprüchen 2 und 3 angegeben.

Die Erfindung besteht im Kern darin, zum sicheren Betrieb einer gleitschuhgelagerten Drehtrommel während des Betriebes die Schmierspaltdicke, d. h. den Abstand zwischen der Gleitlagerschuh-Tragfläche und der darauf über den Schmierspalt abgestützten Drehtrommel bzw. deren Lauffläche direkt mit 3 Sensoren zu messen und in Abhängigkeit dieser Meßgröße den Drehtrommelbetrieb zu steuern. Primär wird erfindungsgemäß festgestellt, ob an den Gleitschuhlagern überhaupt ein meßbarer Druckölfilm bzw. ein Druckölpolster vorhanden ist. Wenn ja, kann der Drehrohrantrieb gestartet werden und z. B. die Rohrmühle angefahren werden. Ergibt die direkte Schmierspaltmessung eine Meßgröße Null, wird der Drehrohrbetrieb abgeschaltet. Zusätzlich zu dieser Überwachung und Steuerung kann bei einem ermittelten vorhanden Druckölfilm noch dessen Dicke in absoluten Zahlen als sekundäre Meßgröße und damit auch die durch die druckölbeaufschlagten Gleitlagerschuhe bewirkte Hubhöhe ermittelt werden.

Zur Realisierung der direkten Messung der Schmierspaltdicke sind an jedem Gleitschuhlagerelement des Drehrohres wenigstens drei Sensoren angeordnet, die die Schmierspaltdicke, d. h. den Abstand zwischen der Gleitlagerschuh-Tragfläche und der darauf über dem Schmierspalt bzw. Druckölfilm abgestützten Drehtrommel-Lauffläche berührungslos direkt messen. Die Sensoren sind elektronische Meßwertaufnehmer, vorzugsweise mit induktiv oder kapazitiv erzeugtem Meßsignal. Zum Erhalt eines repräsentativen Meßwertes sind pro Gleitlagerschuhelement drei Sensoren angeordnet, nämlich ein Sensor etwa mittig im Einlaufbereich und zwei Sensoren etwa in den Ecken des Auslaufbereiches des Gleitlagerschuhelementes, wodurch die räumliche Abstandszuordnung von Gleitlagerschuh-Tragfläche und Drehtrommel-Lauffläche überwacht und gemessen und ein eventuelles Verkippen von überwachten Gleitlagerschuhen ermittelt wird.

Die Erfindung und deren weitere Merkmale und Vorteile werden anhand des in den Figuren schematisch dargestellten Ausführungsbeispiels näher erläutert. Es zeigt:
- Figur 1:: ausschnittsweise im Querschnitt den unteren Umfangsbereich eines großen schweren Drehrohres wie z. B. einer Rohrmühle, mit beispielsweise vier Gleitlagerschuhelementen zur Aufnahme der Radiallast an einer Lagersstation des Drehrohres,
- Figur 2:: die Draufsicht auf ein Gleitlagerschuhelement mit drei Sensoren.

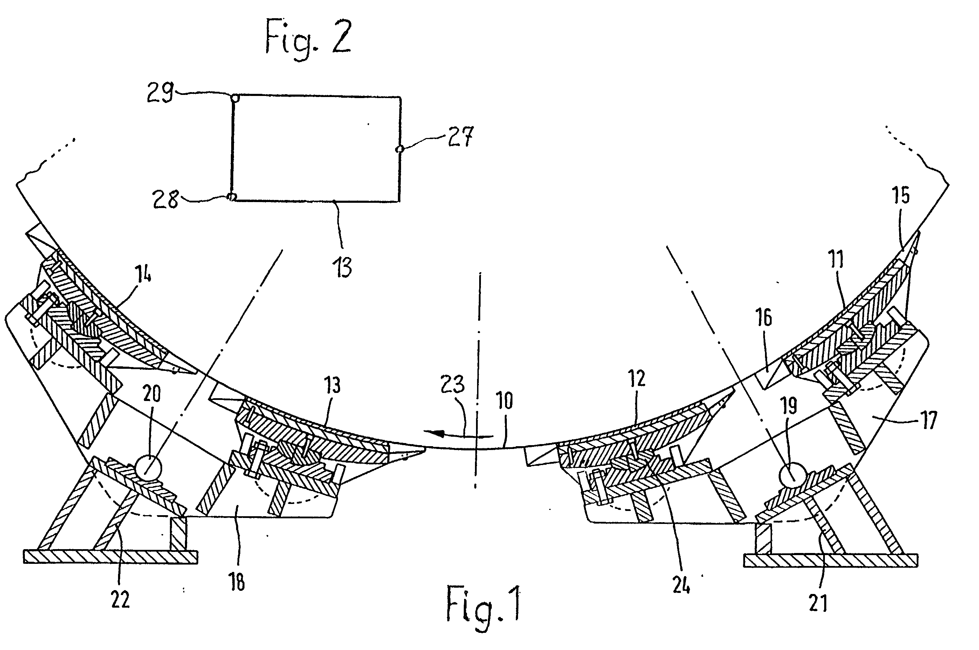

Nach Figur 1 ist der Mantel 10 einer Rohrmühle an einer Lagerstation auf vier um den Mantelumfang verteilten Gleitschuhlagerelementen 11, 12, 13, 14 radial abgestützt, die hydrodynamische Gleitlager sind und deren mit Drucköl gefüllten Lagerschalen der Außenkontur des Drehrohrmantels 10 angepaßt sind. Mit 15 ist jeweils eine Öleinlauftasche und mit 16 jeweils eine Ölauslauftasche der Lagerschalen angezeigt.

Damit sich die Gleitlagerschuhelemente 11, 12, 13, 14 selbsttätig immer so einstellen, daß der radiale Abstand der Gleitlagerschalen von der Drehachse des Drehrohrmantels 10 immer gleich groß ist, sind die benachbarten Lagerelemente 11, 12, an einem gemeinsamen Wippenhebel 17 und die benachbarten Lagerelemente 13, 14 an einem gemeinsamen Wippenhebel 18 abgestützt, welche wiederum über ein Wippgelenk 19 bzw. 20 jeweils über eine Abstützvorrichtung 21 bzw. 22 am Fundament abgestützt sind. Außerdem sind die Gleitschuhlagerelemente, in der Zeichnung gezeigt am Element 12, jeweils über eine Kugelkalotte 24 am Wippenhebel abgestützt, so daß die Gleitlagerschalen auch Bewegungen des Drehrohrmantels 10 mitmachen können in dem Falle, daß sich der Neigungswinkel des Drehrohrmantels gegenüber der Horizontalen ändert und/oder daß sich der Drehrohrmantel während seiner Drehung um bestimmte Größen durchbiegen oder sonstwie verformen sollte.

An jedem Gleitschuhlagerelement, in der Draufsicht der Fig. 2 wird am Beispiel des Gleitschuhlagerelementes 13 gezeigt, wie pro Gleitlagerschuhelement erfindungsgemäß drei Sensoren 27, 28, 29 angeordnet sind, nämlich ein Sensor 27 etwa mittig im Einlaufbereich und zwei Sensoren 28, 29 etwa in den Ecken des Auslaufbereiches des Gleitlagerschuhelementes 13. Mittels der drei Sensoren pro Gleitlagerschuhelement kann die räumliche Abstandszuordnung der Gleitlagerschuh-Tragfläche und der Drehtrommel-Lauffläche gemessen und überwacht werden, um auch eventuelle Verkippungen der Gleitschuhlagerelemente feststellen zu können.

Die Erfindung ist nicht nur anwendbar für Gleitschuhlagerungen zur Aufnahme von radialen Lasten, sondern auch grundsätzlich für Gleitschuhlagerungen zur Aufnahme von axialen Lasten.

## Patentansprüche

1. Gleitschuhlagerung für Drehtrommeln (10) wie z. B. Rohrmühlen, Drehrohröfen etc., die auf mit Drucköl beaufschlagten Gleitlagerschuhen gelagert sind, wobei pro Lagerstation um den unteren Umfangsbereich des Mantels (10) der Drehtrommel mehrere Gleitschuhlagerelemente (11 bis 14) verteilt angeordnet sind und die Gleitschuhlagerelemente (11 bis 14) jeweils über eine Kugelkalotte (24) radial abgestützt sind,
**gekennzeichnet durch** folgende Merkmale:
an jedem Gleitschuhlagerelement (11 bis 14) sind drei Sensoren angeordnet, nämlich ein Sensor (27) etwa mittig im Einlaufbereich und zwei Sensoren (28, 29) etwa in den Ecken des Auslaufbereiches des Gleitschuhlagerelementes, wobei jeder Sensor die Schmierspaltdicke, d. h. den Abstand zwischen der Gleitlagerschuh-Tragfläche und der darauf über den Schmierspalt bzw. Druckölfilm abgestützten Drehtrommel-Lauffläche berührungslos direkt misst.

2. Gleitschuhlagerung nach Anspruch 1,
**dadurch gekennzeichnet, dass** die Sensoren (27, 28, 29) mit Signal-, Anzeige-, Registrierungs- und/oder Steuerungseinrichtungen für den Betrieb des gelagerten Drehrohres (10) verbunden sind.

3. Gleitschuhlagerung nach Anspruch 1,
**dadurch gekennzeichnet, dass** die Sensoren (27, 28, 29) elektronische Messwertaufnehmer mit induktiv oder kapazitiv erzeugtem Messsignal sind.

## Claims

1. Sliding-pad bearing arrangement for rotary drums (10), such as, for example, drum mills, rotary kilns, etc., which are mounted on sliding bearing pads to which pressurized oil is admitted, a plurality of sliding-pad bearing elements (11 to 14), per bearing station, being arranged in a distributed manner about the bottom circumferential region of the lateral surface (10) of the rotary drum, and the sliding-pad bearing elements (11 to 14) each being supported radially via a spherical segment (24), **characterized by** the following features:
three sensors are arranged at each sliding-pad bearing element (11 to 14), namely one sensor (27) approximately centrally in the inlet region and two sensors (28, 29) approximately in the corners of the outlet region of the sliding-pad bearing element, each sensor, in a non-contact manner, directly measuring the lubricating gap thickness, i.e. the distance between the sliding-bearing-pad bearing surface and the rotary-drum running surface supported thereon via the lubricating film or pressurized-oil film.

2. Sliding-pad bearing arrangement according to Claim 1, **characterized in that** the sensors (27, 28, 29) are connected to signalling, indicating, recording and/or control devices for the operation of the mounted rotary drum (10).

3. Sliding-pad bearing arrangement according to Claim 1, **characterized in that** the sensors (27, 28, 29) are electronic measured-value transducers with inductively or capacitively generated measuring signal.

## Revendications

1. Palier de patin à glissement pour tambours rotatifs (10), comme par exemple des broyeurs tubulaires, des fours tubulaires tournants, etc., qui sont montés sur des patins de paliers à glissement alimentés en huile sous pression, dans lequel plusieurs éléments de palier de patin à glissement (11 à 14) sont disposés par poste de support de façon répartie autour de la région périphérique inférieure de l'enveloppe (10) du tambour rotatif et les éléments de palier de patin à glissement (11 à 14) sont chaque fois supportés radialement par une calotte sphérique (24), **caractérisé par** les caractéristiques suivantes: sur chaque élément de palier de patin à glissement (11 à 14) sont disposés trois capteurs, à savoir un capteur (27) sensiblement au milieu de la zone d'entrée et deux capteurs (28, 29) sensiblement dans les coins de la zone de sortie de l'élément de palier de patin à glissement, dans lequel chaque capteur mesure directement sans contact l'épaisseur de l'interstice de lubrification, c'est-à-dire la distance entre la face portante du patin de palier à glissement et la face de glissement du tambour rotatif supportée sur celle-ci par l'interstice de lubrification respectivement le film d'huile sous pression.

2. Palier de patin à glissement selon la revendication 1, **caractérisé en ce que** les capteurs (27, 28, 29) sont reliés à des dispositifs de signalisation, d'affichage, d'enregistrement et/ou de commande pour la conduite du tube rotatif supporté (10).

3. Palier de patin à glissement selon la revendication 1, **caractérisé en ce que** les capteurs (27, 28, 29) sont des transducteurs électroniques avec un signal de mesure produit de façon inductive ou capacitive.
